# EUROPEAN PATENT SPECIFICATION

(11) **EP 0 943 585 B1**
(45) Date of publication and mention of the grant of the patent: **07.06.2006**
(21) Application number: 99104052.8
(22) Date of filing: 17.03.1999
(51) Int. Cl.: C01B 3/56, C10K 1/32, B01D 53/04, C01B 3/48

(54) **Combustion method**
Verbrennungsmethode
Méthode de combustion

(30) Priority: 17.03.1998 JP 6665998
(43) Date of publication of application: 22.09.1999
(73) Proprietor: KABUSHIKI KAISHA TOSHIBA, Kawasaki-shi, Kanagawa 212-8572 (JP)
(72) Inventor: Nakagawa, Kazuaki, 1-1 Shibaura 1-chome Minato-ku Tokyo 105 (JP); Ohashi, Toshiyuki, 1-1 Shibaura 1-chome Minato-ku Tokyo 105 (JP)
(74) Representative: HOFFMANN EITLE

(56) References cited:
- EP-A- 0 115 335
- DE-A- 4 314 225
- DATABASE WPI Section Ch, Week 199730 Derwent Publications Ltd., London, GB; Class E36, AN 1997-323131 XP002132570 & JP 09 099214 A (TOSHIBA KK), 15 April 1997 (1997-04-15) & US 5 866 090 A 2 February 1999 (1999-02-02)
- PATENT ABSTRACTS OF JAPAN vol. 018, no. 082 (C-1164), 10 February 1994 (1994-02-10) & JP 05 287284 A (MITSUBISHI HEAVY IND LTD), 2 November 1993 (1993-11-02)
- MORI, Y. ET AL: "A strategy for pre-combustion removal of carbon dioxide from hydrocarbon-fueled power plants" HTD (AM. SOC. MECH. ENG.) (1991), 169(ADV. HEAT TRANSFER AUGMENTATION MIXED CONVECT.), 13-21 ,1991, XP002132685

## Description

The present invention relates to the use of a combustion system for converting hydrocarbon base fuel.

In a combustion system used solid or liquid fuel having hydrocarbon as a main component such as coal or petroleum, the fuel is first converted into hydrogen and carbon monoxide in gasification and then burnt. In the gasification process, however, carbon dioxide is produced and amounts to a volume content of 10 to 40% in a combustion gas, so that there. has been a problem that a calorie of combustion obtained by burning the fuel gas is reduced due to coexistence of the carbon dioxide gas.

With this problem unsolved, for separation/removal of a carbon dioxide gas in a combustion gas, methods have been studied: one is that a high temperature gas obtained from gasification of fuel such as petroleum is once cooled to an environmental temperature and subjected to chemical absorption by an alkanolamine base solvent and a second is that carbon dioxide is separated and removed from the gas which has been cooled by a cellulose acetate membrane.

However, any of the carbon dioxide separation/removal methods has a great heat loss due to cooling down fuel gas before introducing into a combustion system with a high temperature, thereby preventing from application in a wide range.

Further, JP 5287284 discloses a process for reforming liquefied natural gas wherein liquefied natural gas is gasefied in a vaporizer and fed to a reformer. The reformed gas is introduced into a high temperature CO shift reactor and a low-temperature shift reactor to reform the CO through the shift reaction with steam to H₂ and CO₂. Thereafter the reformed gas is treated to separate and remove the CO₂.

It is accordingly an object of the present invention to provide the use of a combustion system by which when hydrocarbon base fuel is converted to a gas including hydrogen and burnt, a carbon dioxide gas in a fuel gas of a high temperature is not cooled and removed at the high temperature, and thereby combustion with high efficiency is enabled.

This object is solved by a method according to claims 1, 8 and 12.

According to a first aspect of the present invention, there is provided the use of a combustion system comprising:
a fuel conversion unit for converting from hydrocarbon base fuel to a gas including carbon monoxide, hydrogen and carbon dioxide;
a carbon dioxide gas separation unit into which a gas generated in the conversion unit is introduced and in which a carbon dioxide gas absorbent is accommodated comprising at least one lithium composite oxide for absorbing a carbon dioxide gas at a temperature higher than a temperature of the gas generated in the conversion unit; and
a combustion unit for burning a gas separated in the separation unit as fuel.

According to a second aspect of the present invention, there is provided the use of a combustion system comprising:
a fuel conversion unit for converting hydrocarbon base fuel into a gas including carbon monoxide, hydrogen and carbon dioxide;
a carbon dioxide gas separation unit into which a gas generated in the conversion unit is introduced and in which a carbon dioxide gas absorbent for absorbing a carbon dioxide gas at a temperature higher than the temperature of the gas generated in the conversion unit is accommodated; and
a combustion unit for burning a gas separated in the separation unit as fuel,
wherein the carbon dioxide separation unit comprises a reactor, and a disc disposed in the reactor near the bottom thereof and holding the carbon dioxide gas absorbent in the forms of particles, and a drive source for rotating the disc, and a partition wall fixed on opposed inner side walls in the reactor, an upper inner surface of the reactor and having lower end to contact the upper surface of the disc, so that the partition wall halves the reactor into left and right sides to form first chamber connected to the fuel conversion unit and second chamber connected to a reproducing gas supply source.

According to a third aspect of the present invention, there is provided the use of a combustion system comprising:
a fuel conversion unit for converting hydrocarbon base fuel into a gas including carbon monoxide, hydrogen and carbon dioxide;
a carbon dioxide gas separation unit into which a gas generated in the conversion unit is introduced and in which a carbon dioxide gas absorbent is accommodated for absorbing a carbon dioxide gas at a temperature higher than a temperature of the gas generated in the conversion unit; and
a combustion unit for burning a gas separated in the separation unit as fuel,
wherein the carbon dioxide absorbent contains at least one lithium composite oxide selected from the group consisting of lithium zirconate, lithium ferrite, lithium nickel oxide and lithium titanate as a main component.

This summary of the invention does not necessarily describe all necessary features so that the invention may also be a sub-combination of these described features.

The invention can be more fully understood from the following detailed description when taken in conjunction with the accompanying drawings, in which:

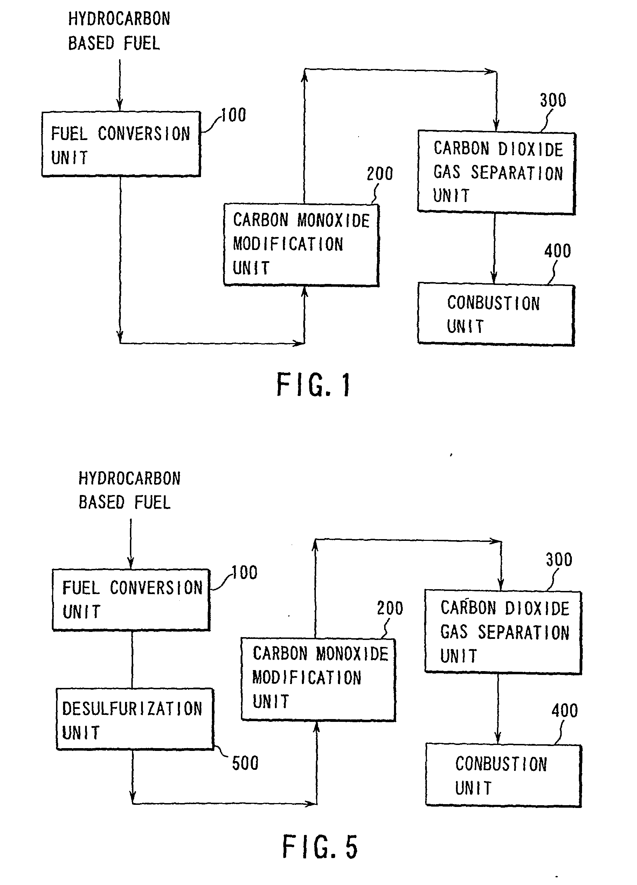

FIG. 1 shows a block diagram showing the use of a combustion system according to the present invention.
FIG. 2 shows a schematic representation showing a carbon dioxide gas separation unit incorporated in the combustion system of FIG. 1.
FIG. 3 is a sectional schematic representation showing another carbon dioxide gas separation unit incorporated in the combustion system of FIG. 1.
FIG. 4 is a sectional schematic representation showing a further carbon dioxide gas separation unit incorporated in the combustion system of FIG. 1.
FIG. 5 shows a block diagram showing the use of another combustion system according to the present invention.
A combustion system according to the present invention will be detailed with reference to FIG. 1 below.

In a fuel conversion unit 100, hydrocarbon base fuel is introduced and converted into a gas including hydrogen, carbon monoxide and carbon dioxide. A modification unit 200 is provided when a necessity arises. A gas-which is generated in the fuel conversion unit 100 is introduced into the modification unit 200 and water vapor singly or together with oxygen is reacted with carbon monoxide in the gas to produce hydrogen.

In a carbon dioxide gas separation unit 300, a gas generated in the fuel conversion unit 100 or a gas which has been modified in the modification unit 200 is introduced and a carbon dioxide gas absorbent which absorbs a carbon dioxide gas at a temperature near a temperature of the gas is put for filling. In a combustion unit 400, a gas separated in the separation unit 300 is used as fuel and the gas is burnt in a mixture with a gas including oxygen, for example air.

For examples of hydrocarbon base fuel are petroleum and coal and plant fuel such as firewood and wood chips.

The fuel conversion unit 100 may be a commonly known system whereby coal or petroleum is gasified. Such a system works in the following way: hydrocarbon base fuel is supplied into the fuel conversion unit, for example a reactor, and an atmosphere with a high pressure (for example, 20 to 30 atm) and a high temperature is produced in the reactor, into which water vapor or oxygen is supplied.

A modification unit 200 is provided between the fuel conversion unit 100 and the carbon dioxide gas separation unit 300 at need and is not necessarily required. A modification unit 200 has a structure provided with a reactor in which a Cu-ZnO-AlO base or iron oxide base catalyst is put for filling. In such a modification unit 200, the gas including hydrogen, carbon monoxide and carbon dioxide in the fuel conversion unit 100 and water vapor singly or together with oxygen are supplied into the reactor, and a temperature in the reactor is raised to a temperature in the range of from 350 to 500°C. Therefore, a reaction shown by the following reaction equation (1) takes place between carbon monoxide and water vapor singly or together with oxygen:

CO + H₂O → H₂ + CO₂ (1).

It is preferred that carbon dioxide absorbent consists of least one lithium composite oxide, which produces lithium carbonate reacting carbon dioxide, selected from lithium zircona, lithium ferrite, lithium nickel oxide and lithium titania. The absorbents absorbs carbon dioxide at a temperature near an outlet-port temperature of the fuel conversion unit 100(a temperature at an outlet-port of the modification unit 200, if provided). According to the following equations (2) to (5) each of the absorbents absorbs a carbon dioxide gas or releases a carbon dioxide gas in the reverse direction thereof:

Li₂ZrO₃ (s) + CO₂ (g) → ZrO₂ (s) + Li₂CO₃ (1) (2)

2LiFeO₂ (s) + CO₂ (g) → Fe₂O₃ (s) + Li₂CO₃ (1) (3)

Li₂NiO₂(s) + CO₂ (g) → NiO (s) + Li₂CO₃ (1) (4)

Li₂TiO₃ (s) + CO₂ (9) → TiO₂ (s) + Li₂CO₃ (1) (5)

The carbon dioxide absorbents has properties that produces heat in company with absorption of carbon dioxide in the temperature range of from 350 to 500°C and gives the heat to a fuel gas. Hence, since the fuel gas acquires heat energy during travel from an outlet port of the fuel conversion unit 100 to the combustion unit 400 through the carbon oxide gas separation unit 300, the fuel gas is introduced into the combustion unit 400 as fuel with a higher temperature.

The carbon dioxide gas absorbents are used in the forms of, for example particles, granules, pellets and in addition in such a manner that an absorbent layer is coated on a substrate of a honeycomb structure.

As a carbon dioxide gas separation unit 300 described above, for example, the following structure is employed.

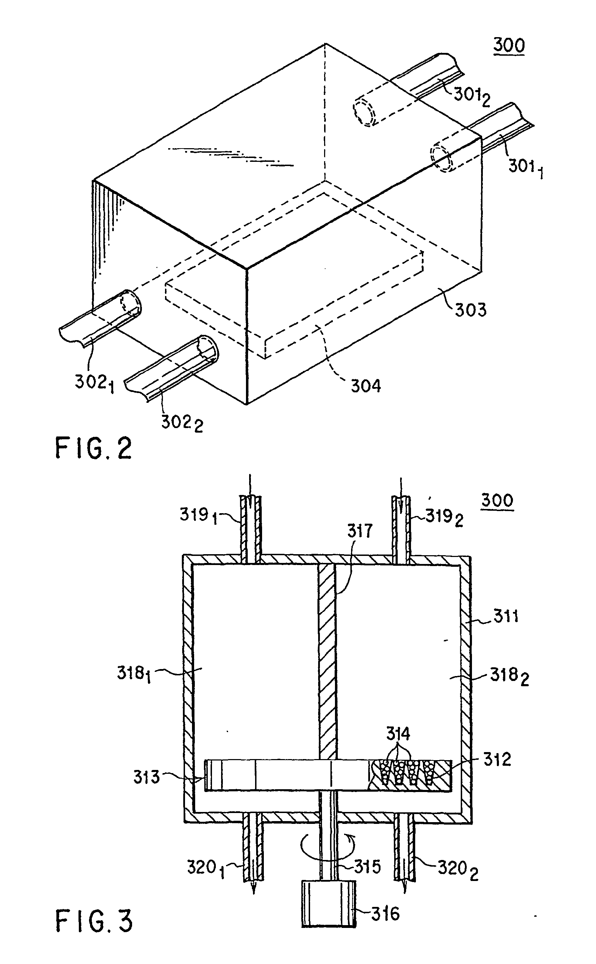

### 1) A carbon dioxide gas separation unit shown in FIG. 2

The carbon dioxide gas separation unit 300, as shown in FIG. 2, comprises a reactor 303 which is accommodated a carbon dioxide gas absorbent (for example, Li₂ZrO₃) 304 having in the form of, for example, a block. First and second introduction pipes 301₁, 301₂ disposed in parallel to each other are connected to one side wall of the reactor 300, respectively. Discharge pipes 302₁, 302₂ disposed in parallel to each other are connected to the opposed side wall of the reactor 300, respectively.

The fuel conversion unit 100 (or the modification unit 200) is connected to the other end of the first introduction pipe 301₁. A reproducing gas supply source, not shown is connected to the other end of the introduction pipe 301₂. The introduction pipe 301₁ and 301₂ are provided with valves, not shown, in the pipelines, respectively.

The combustion unit 400 is connected to the other end of the first discharge pipe 302₁. A processing unit, not shown, for recovering a carbon dioxide gas by processing a carbon dioxide containing gas is connected to the other end of the second discharge pipe 302₂. The discharge pipes 302₁, 302₂ are provided with valves, not shown, in the pipelines, respectively.

In the mean time, the carbon dioxide gas absorbent 304 in the form of a block is accommodated in a tray, not shown.

Then, operations for absorption of a carbon dioxide gas and reproduction of an absorbent performed by the carbon dioxide gas separation unit shown in FIG. 2 described above will be described.

### (1-1) An absorption/removal operation for a carbon dioxide gas

The valves of the first introduction pipe 301₁ and the first discharge pipe 302₁ are opened, respectively, while the valves of the second introduction pipe 301₂ and the second discharge pipe 302₂ are closed, respectively. A gas, which has been produced in the fuel conversion unit 100 (which has been modified in the modification unit 200), at a temperature, for example, in the range of from 400°C to 600°C is introduced into the reactor 303 through the first introduction pipe 301₁. At this time, carbon dioxide in the gas and the carbon dioxide gas absorbent (for example, Li₂ZrO₃) 304 accommodated in the reactor 303 react with each other according to the (2) equation (the reaction equation in the upper place). As a result, the carbon dioxide gas in the gas is absorbed in the gas absorbent 304, the absorbent is chemically transformed into ZrO₂ (s) and Li₂CO₃ (1). The gas from which carbon dioxide is removed by absorption is discharged through the first discharge pipe 302₁ to the combustion unit 400 for utilization as fuel.

### (1-2) A regeneration operation of the carbon gas absorbent

After a majority of the carbon gas absorbent (for example, Li₂ZrO₃) 304 in the reactor 303 is chemically converted into ZrO₂ (s) and Li₂CO₃ (1), the valves of the first introduction pipe 301₁ and the first discharge pipe 302₁ are closed, respectively, while the valves of the second introduction pipe 301₂ and the second discharge pipe 302₂ are opened, respectively. A gas such as nitrogen having a temperature, for example 600°C, necessary to cause a reaction of the (2) equation (the reaction equation in the lower place) is introduced into the reactor 303 from the reproducing gas supply source, not shown, through the second introduction pipe 301₂. At this time, ZrO₂ (s) and Li₂CO₃ (1) is reproduced Li₂ZrO₃ as a carbon dioxide absorbent through a reaction according to the (2) equation (the reaction equation in the lower place), and a carbon dioxide gas is released. A gas contained the carbon dioxide is discharged to a carbon dioxide gas processing unit through the second discharge pipe 302₂.

After the carbon dioxide gas absorbent is reproduced in such a manner, an absorption and separation operation of a carbon dioxide gas by (1-1) process described above is performed. Accordingly, a gas removed a carbon dioxide gas can introduced into the combustion unit 400 through the first discharge pipe 302₁ to utilize as fuel, and the carbon dioxide gas absorbent 304 in the reactor 303 can repeatedly used.

### 2) A carbon dioxide gas separation unit shown in FIG. 3

The carbon dioxide gas separation unit 300 comprises a reactor 311 in the shape of a cylinder as shown in FIG. 3. A disk 313 having a plurality of non-through holes 312 in the shape of a circular cone with the apex down disposed in the reactor 311 near the bottom thereof. The carbon dioxide gas absorbent (for example, Li₂ZrO₃) 314 in the shape of particles is put for filling in the non-through holes 312 of the disc 313 so that the parts of the non-through holes lower than the surface of the disc 313 are filled with the particles. A drive source, for example a pulse motor 316 having a rotary shaft 315 is disposed under the bottom portion. The rotary shaft 315 is attached to the bottom surface of the disc 313 through the bottom portion of the reactor 311. The disc 313 is rotated by driving of the pulse motor 315 half a revolution at a time in an intermittent manner.

A partition wall 311 is disposed in the reactor 311 so that ends potions of the wall 311 are fixed on opposed inner sidewalls and an upper inner surface of the reactor 311, respectively. The lower end of the wall 311 is contacted with the upper surface of the disc 313. With such a construction, first and second chambers 318₁, 318₂ in the reactor 311 are respectively partitioned to the left and right sides by the partition wall 311.

The first and second introduction pipes 319₁ and 319₂ are respectively connected to the upper portion of the reactor 311 corresponding to the first and second chambers 318₁, 318₂. The other end of the first introduction pipe 319₁ is connected to the fuel conversion unit 100 (or the modification unit 200). The other end of the second introduction pipe 319₂ is connected to a reproducing gas supply source, not shown. The introduction pipes 319₁ and 319₂ are respectively provided with valves in the pipelines.

First and second discharge pipes 320₁, 320₂ are connected to the bottom portion of the reactor 311 at positions corresponding to the first and second chambers 318₁, 318₂. The other end of the first discharge pipe 320₁ is connected to the combustion unit 400. The other end of the second discharge pipe 320₂ is connected to a processing unit, not shown, for recovery of a carbon dioxide gas, for example, by processing a carbon dioxide containing gas. The discharge pipes 320₁, 320₂ are respectively provided with valves, not shown, in the pipelines.

Operations for absorption and removal of a carbon dioxide gas and reproduction of a carbon dioxide gas absorbent in the carbon dioxide gas separation unit shown in FIG. 3 will be described.

### (2-1) An absorption/removal operation for a carbon dioxide gas

The valves of the first introduction pipe 319₁ and the first discharge pipe 320₁ are opened, respectively, while the valves of the second introduction pipe 319₂ and the second discharge pipe 320₂ are closed, respectively. A gas produced in the fuel conversion unit 100 at a temperature, for example in the range of from 400°C to 600°C (or a gas which has been modified in the modification unit 200) is introduced into the first chamber 318₁ of the reactor 311 through the first introduction pipe 319₁. At this time, carbon dioxide in the gas and the carbon dioxide gas absorbent (for example, Li₂ZrO₃) 314 are reacted with each other according to the (2) equation (the reaction equation in the upper place). The carbon dioxide gas absorbent is filled in the non-through holes 312 which is positioned in a semicircular disc portion of the disc 313 included in the first chamber 318₁. As a result, the carbon dioxide gas in the gas is absorbed in the gas absorbent 314, and the absorbent is chemically transformed into ZrO₂ (s) and Li₂CO₃ (1). The gas removed carbon dioxide is discharged through the first discharge pipe 320₁ to the combustion unit 400 for utilization as fuel.

### (2-2) A reproduction operation of the carbon dioxide gas absorbent

After a majority of the carbon dioxide gas absorbent (for example, Li₂ZrO₃) 314 filled in the non-through holes 312 is chemically converted into ZrO₂ (s) and Li₂CO₃ (1), the disc 313 supported on the rotary shaft 315 is rotated by half a revolution (180 degrees) by drive of the pulse motor 316. while, a gas, which has been generated in the fuel conversion unit 100 (or which has been modified in the modification unit 200), at a temperature, for example, in the range of form 400°C to 600°C is continuously introduced into the first chamber 318₁ of the reactor 311 through the first introduction pipe 301₁. After the disc 313 is rotated by half a revolution, ZrO₂ (s) and Li₂CO₃ (1) converted from Li₂ZrO₃ filled in the non-through holes 312 are moved from the first chamber 318₁ to the second chamber 318₂. Simultaneously, the carbon dioxide gas absorbent (for example, Li₂ZrO₃) 314 filled in the non-through holes 312 in a semicircular disc 313 portion is moved from the second chamber 318₂ to the first chamber 318₁. That is, the Li₂ZrO₃ in the particle form which is effective for absorption of a carbon dioxide gas is moved into the first chamber 318₁ side together with the rotation of the disc 313. As a result, as in the description of the (2-1), the carbon dioxide gas generated in the fuel conversion unit 100 or the modification unit 200 is absorbed in the gas absorbent 314, and the absorbent is chemically converted into ZrO₂ (s) and Li₂CO₃ (1). A gas removed a carbon dioxide gas is discharged into the combustion unit 400 through the first discharge pipe 320₁ and consumed as fuel.

At the same time, the valves of the second introduction pipe 319₂ and the second discharge pipe 320₂ are opened, respectively. A gas such as nitrogen having a temperature, for example 600°C, necessary to cause a reaction of the (2) equation (the reaction equation in the lower place) is introduced into the second chamber 318₂ of the reactor 311 through the second introduction pipe 320₂ from the regenerated gas supply source, not shown. At this time, ZrO₂ (s) and Li₂CO₃ (1) filled in the non-through holes 312 in a semicircular disc 313 portion included in the second chamber 318₂ are reacted according to the (2) equation (the reaction equation in the lower place) described above. As a result, Li₂ZrO₃ (the carbon dioxide absorbent) is reproduced, and a carbon dioxide gas is released. A gas including a carbon dioxide is discharged into the carbon dioxide processing unit through the second discharge pipe 320₂.

As described above, the carbon dioxide gas separation unit comprises: the reactor 311 having a cylindrical shape including the first and second chambers 318₁, 318₂ partitioned by the partition wall 317; and the disc 313 which holds the carbon dioxide gas absorbent (for example, Li₂ZrO₃) 314 in the shape of particles. The disc 313 is also rotated by half a revolution at a time in an intermittent manner, and is shared by the first and second chambers 318₁, 318₂, Therefore, a reproduction operation of the carbon dioxide absorbent can be conducted in the second chamber 318₂ while an absorption operation of a carbon dioxide gas is effected in the first chamber 318₁. Hence, a gas removed a carbon dioxide gas can be continuously introduced into the combustion unit 400 through the first discharge pipe 320₁ and can be consumed as fuel.

In the carbon dioxide gas separation unit shown in FIG. 3, the following operations may be adopted. That is, while the disk 313 held the carbon dioxide absorbent (for example, Li₂ZrO₃) 314 in the shape of particles is slowly rotated, a gas, which has been produced in the fuel conversion unit 100 (which has been modified in the modification unit 200), at a temperature, for example, in the range of from 400°C to 600°C is introduced into the first chamber 318₁ through the first introduction pipe 301₁. Simultaneously, a gas of a specific temperature is introduced into the second chamber 318₂ through the second introduction pipe 320₂ from a regenerated gas supply source. With such operations adopted, absorption and removal of a carbon dioxide gas in a gas is performed in the first chamber 318₁ and at the same time reproduction of the carbon dioxide absorbent 314 held on the disc 313 is conducted in the second chamber 318₂.

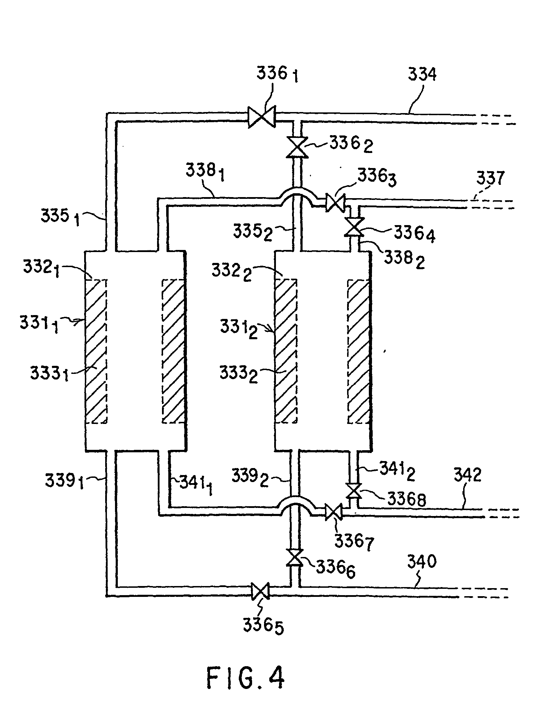

### 3) A carbon dioxide gas separation unit shown in FIG. 4

The carbon dioxide conversion unit 300 comprises a first and second reaction tower 311₁, 331₂. Cylindrical meshed bodies 332₁, 332₂ are disposed on the inner surfaces of the reaction towers 333₁, 333₂, respectively. A carbon dioxide absorbent (for example, Li₂ZrO₃) 333₁, 333₂ in the form of particles are put for filling in the cylindrical meshed bodies 332₁, 332₂.

First and second introduction branch pipes 335₁, 335₂ are connected to upper portions of the first and second reactor tower 331₁, 331₂, respectively and other ends of the branch pipes 335₁, 335₂ are connected to a gas introduction pipe 334. The other end of the gas introduction pipe 334 is connected to the fuel conversion unit 100 (or the modification unit 200). First and second valves 336₁, 336₂ are interposed in the first and second introduction branch pipes 335₁, 335₂ in the respective pipelines.

The first and second gas supply branch pipes 338₁, 338₂ are respectively connected to the upper portions of the first and second reaction towers 331₁, 331₂, respectively and other ends of the branch pipes 338₁, 338₂ are connected to a gas supply pipe 337. The other end of the gas supply pipe 337 is connected to a reproducing gas supply source, not shown. Third and fourth valves 336₃, 336₄ are interposed in the gas supply branch pipes 339₁, 339₂ in the respective pipelines.

First and second fuel gas discharge branch pipes 339₁, 339₂ are respectively connected to the lower portions of the reaction towers 331₁, 331₂ and the other ends of the branch pipes 339₁, 339₂ are connected to a fuel gas discharge pipe 340. The other end of the fuel gas discharge pipe 340 is connected to the combustion unit 400. Fifth and sixth valves 336₅, 336₆ are interposed in the fuel gas discharge branch pipes 339₁, 339₂ in the respective pipelines.

First and second gas discharge branch pipes 341₁, 341₂ are respectively connected to lower portions of the reaction towers 331₁, 331₂ and the other ends of the branch pipes 341₁, 341₂ are connected to a gas discharge pipe 342. The other end of the discharge pipe 342 is connected to, for example a processing unit, not shown, for recovery of a carbon dioxide gas by processing a carbon dioxide containing gas. Seventh and eighth valves 336₇, 336₈ are interposed in the gas discharge branch pipes 341₁, 341₂ in the respective pipelines.

Operations for absorption and removal of a carbon dioxide gas and reproduction of a carbon dioxide gas absorbent in the carbon dioxide gas separation unit shown in FIG. 4 will be described.

### (3-1) An operation of absorption and removal of a carbon dioxide gas in the first reaction tower 331₁

The first valve 336₁ interposed in the first introduction branch pipe 335₂ and the fifth valve 336₅ interposed in the first fuel gas branch discharge pipe 339₂ are opened, respectively and the other valves 336₂ to 336₈ are closed, respectively. A gas, which has bee generated in the fuel conversion unit 100 (or which has been modified in the modification unit 200), at a temperature, for example in the range of from 400°C to 600°C is introduced into the first reaction tower 331₁ through the gas introduction pipe 334 and the first introduction branch pipe 335₁. At this time, a carbon dioxide gas in the gas and the carbon dioxide absorbent (for example, Li₂ZrO₃) 333₁ accommodated in the cylindrical meshed body 332₁ in the first reaction tower 333₁ are reacted with each other according to the (2) equation (the reaction equation in the upper place). As a result, a carbon dioxide gas in the gas is absorbed in the carbon dioxide absorbent 333₁ and the absorbent 333₁ is chemically converted into ZrO₂ (s) and Li₂CO₃ (1). The gas removed a carbon dioxide gas is discharged into the combustion unit 400 through the first fuel gas branch discharge pipe 339₁ and the fuel branch discharge pipe 340 and consumed as fuel.

### (3-2) An operation of absorption and removal of a carbon dioxide gas in the second reaction tower 331₂

After a majority of the carbon dioxide absorbent (for example, Li₂ZrO₃) 333₁ in the first reactor 331₁ is chemically converted into ZrO₂ (s) and Li₂CO₃ (1), the valve 336₁ of the first introduction branch pipe 335₁ and the valve 336₅ of the first fuel gas discharge branch pipe 339₁ are closed, respectively. Simultaneously, the valve 336₂ of the second introduction branch pipe 335₂ and the valve 336₆ of the second fuel gas discharge branch pipe 339₂ are opened, respectively, so that gas introduction to the first reaction tower 331₁ is changed to the second reaction tower 331₂. Thereafter, a gas which has been generated in the fuel conversion unit 100 (or a gas which has been modified in the modification unit 200) at a temperature, for example in the range of from 400°C to 600°C is introduced into the second reaction tower 331₂ through the gas introduction pipe 334 and the second gas introduction branch pipe 335₂. At this time, a carbon dioxide gas in the gas and the carbon dioxide absorbent (for example, Li₂ZrO₃) 333₂ accommodated in the cylindrical meshed body 332₂ in the second reaction tower 331₂ are reacted with each other according to the (2) equation (the reaction equation in the upper place). As a result, a carbon dioxide gas in the gas is absorbed in the gas absorbent 333₂ and the absorbent 333₂ is chemically converted into ZrO₂ (s) and Li₂CO₃ (1). The gas removed a carbon dioxide gas is discharged into the combustion unit 400 through the second fuel gas branch discharge pipe 339₂ and the fuel discharge pipe 340 and consumed as fuel.

### (3-3) A reproduction of the carbon dioxide gas absorbent in the first reaction tower 331₁

The third valve 336₃ interposed in the first gas supply branch pipe 338₁ and the seventh valve 336₇ interposed in the first gas discharge branch pipe 341₁, which are connected to the first reaction tower 331₁, are opened respectively, while a gas absorption operation of carbon dioxide is conducted in the second reaction tower 331₂ described in the (3-2). A gas such as nitrogen having a temperature, for example higher than 600°C, necessary to cause the (2) equation (the reaction equation in the lower place) is introduced into the first reaction tower 331₁ through the gas supply pipe 337 and the first gas supply branch pipe 338₁ from the reproducing gas supply source, not shown. At this time, ZrO₂ (s) and Li₂CO₃ (1) in the first reaction tower 331₁ are reacted with each other according to the (2) equation (the reaction equation in the lower place), thereby reproducing Li₂ZrO₃ as a carbon dioxide gas absorbent and releasing a carbon dioxide gas. The gas including the carbon dioxide gas is discharged into the carbon dioxide gas processing unit through the first gas discharge branch pipe 341₁ and the gas discharge pipe 342.

### (3-4) A reproduction operation of the carbon dioxide gas absorbent in the second reaction tower 331₂

The fourth valve 336₄ interposed in the second gas supply branch pipe 338₂ and the eighth valve 336₈ interposed in the second gas discharge branch pipe 341₂ connected to the second reaction tower 331₂ are opened respectively, while a gas absorption operation of carbon dioxide is conducted in the first reaction tower 331₁ described in the (3-1). A gas such as nitrogen having a temperature, for example higher than 600°C, necessary to cause the (2) equation (the reaction equation in the lower place) is introduced into the second reaction tower 331₂ through the gas supply pipe 337 and the second gas supply branch pipe 338₂ from the reproducing gas supply source, not shown. At this time, ZrO₂ (s) and Li₂CO₃ (1) in the second reaction tower 331₂ are reacted with each other according to the (2) equation (the reaction equation in the lower place), thereby reproducing Li₂ZrO₃ as a carbon dioxide gas absorbent and releasing a carbon dioxide gas. The gas including the carbon dioxide gas is discharged into the carbon dioxide gas processing unit through the second gas discharge branch pipe 341₂ and the gas discharge pipe 342.

When the operations of the (3-1) and the (3-4) and the operations of the (3-2) and the (3-3) are repeated, a gas removed a carbon dioxide gas can be used as fuel being almost continuously introduced into the combustion unit 400 through the fuel gas discharge pipe 340.

For example of a combustion unit 400 is a gas turbine.

Then, another combustion system according to the present invention will be detailed with reference to FIG. 5.

In a fuel conversion unit 100, hydrocarbon base fuel is introduced and converted into a gas including hydrogen, carbon monoxide and carbon dioxide. A gas generated in the fuel conversion unit 100 is introduced into a desulfurization unit 500 and a sulfide gas such as SOₓ or H₂S in the gas is removed there. A gas from which a sulfide gas is removed in the desulfurization unit is introduced into a modification unit 200. A modification unit 200 is provided when a necessity arises. A gas generated in the fuel conversion unit 100 is introduced into the modification unit 200 and water vapor singly or together with oxygen is reacted with carbon monoxide in the gas to produce hydrogen.

A gas from which a sulfide gas is removed in the desulfurization unit 500 (or a gas in the modification unit 200) is introduced into a carbon dioxide gas separation unit 300. The carbon dioxide gas separation unit 300 is filled with a carbon dioxide gas absorbent which absorbs a carbon dioxide gas at a temperature in the vicinity of a temperature of the gas. A gas separated in the separation unit 300 is mixed with a gas including oxygen (for example, air) and burned as fuel in the combustion unit 400.

The fuel conversion unit 100, the modification unit 200, the carbon dioxide gas separation unit 300 and the combustion unit 400 constitutes a combustion system having functions and a structure similar to the combustion systems described above.

While as the desulfurization unit 500, there are known of a wet desulfurization type and of a dry desulfurization, one of a dry desulfurization type in which desulfurization is performed at a temperature in the range of from 350 to 500°C is preferably used.

A combustion system according to the present invention which have been described comprises a fuel conversion unit 100 in which hydrocarbon base fuel is converted into a gas including carbon monoxide, hydrogen and carbon dioxide; a carbon dioxide gas separation unit 300 into which a gas generated in the conversion unit 100 is introduced, and which is filled with a carbon dioxide gas absorbent which absorbs a carbon dioxide gas at a temperature in the vicinity of that of the gas introduced; and a combustion unit 400 which burns a gas separated in the separation unit 300 as fuel.

According to such a constitution, hydrocarbon base fuel such as coal and petroleum is gasified in the fuel conversion unit 100 and converted into a gas mainly including hydrogen, carbon monoxide and carbon dioxide, and the gas can be introduced, as fuel with a high combustion heat, into the combustion unit 400. At this time, only a carbon dioxide which does not participate in combustion is efficiently removed without being cooled in the carbon dioxide gas separation unit 300 which is filled with a carbon dioxide absorbent, so that combustion efficiency can be increased.

When a modification unit 200 is provided between the fuel conversion unit 100 and the carbon dioxide gas separation unit 300, hydrogen can be produced using carbon monoxide included in a gas introduced from the conversion unit 100 as raw material. In addition, since a carbon dioxide gas as a by-product gas produced here can be removed in the separation unit 300, a fuel gas having a higher content of hydrogen and a high combustion heat can be introduced into the combustion unit 400.

An another combustion system according to the present invention further comprises a desulfurization unit 500 in a backward stage from the fuel conversion unit 100 which converts hydrocarbon base fuel into a gas including carbon monoxide, hydrogen and carbon dioxide and thereby, a sulfide gas can be removed from the gas introduced from the conversion unit 100, so that reduction in content of a sulfide gas can be achieved at the same time as improvement on combustion efficiency as in the cases of the combustion systems described above.

When the modification unit 200 is further disposed between the desulfurization unit 500 and the conversion unit 300, hydrogen can be produced using carbon monoxide in a gas introduced from the conversion unit 300 and at the same time, a carbon dioxide gas which is produced as a by-product gas here can be absorbed and removed in the separation unit 300. Hence, a fuel gas having a higher content of hydrogen and a high combustion heat, while having a reduced content of a sulfide, can be introduced into the combustion unit 400.

Preferred Examples of the present invention will now be described in detail with reference to FIG. 2.

### (Examples 1 to 5)

Conditions in which the fuel conversion unit (the gasification unit) 100, the desulfurization unit 500, the modification unit 200 and the carbon dioxide gas separation unit 300 were set in the following manner, combustion systems were constituted in combinations of the combustion unit 400 such as a gas turbine and the other units shown in Table 1 and fuel gases were burnt in the combustion unit 400.

### [Fuel conversion unit]

coal supply rate: 133,000 kg/hr
supply of water and oxygen
pressure and temperature in the unit: 26 atm; 1400°C
outlet gas temperature: 430°C

### [Desulfurization unit]

catalyst: iron oxide
working temperature: 430°C

### [Modification unit]

catalyst: iron oxide
working temperature: 500°C

### [carbon dioxide separation unit]

structure of the unit: as shown in FIG. 2
carbon dioxide gas absorbent: 1.3 g of lithium zirconate or lithium ferrite with an average particle diameter of 1 *µ*m was charged in a die having a diameter of 12 mm and subjected to compression molding to obtain a pellet with a porosity of 40%.

### (Comparative example 1)

A fuel gas which was obtained from coal was burnt in a combustion system having a combination of a gasification unit, a desulfurization unit and a gas turbine with neither a modification unit nor a carbon dioxide gas separation unit.

### (Comparative example 2)

A Fuel gas which was obtained from coal was burned in a combustion system having a combination of a gasification unit, a desulfurization unit, a carbon dioxide gas separation unit of an alkanolamine solution recovery type and a gas turbine without a modification unit as shown in Table 1. Since a solution absorption method which was adopted in the carbon dioxide separation unit functioned only in the vicinity of 40°C, a gas which was introduced in the separation unit was once cooled using a heat exchanger and then heated before being introduced into the gas turbine.

**Table 1**

| | Modification unit | Desulfurization unit | CO₂ gas separation unit |
|---|---|---|---|
| Example 1 | Absence | Absence | Presence (lithium zirconate) |
| Example 2 | Absence | Presence | Presence (lithium zirconate) |
| Example 3 | Absence | Presence | Presence (lithium ferrite) |
| Example 4 | Presence | Absence | Presence (lithium zirconate) |
| Example 5 | Presence | Presence | Presence (lithium zirconate) |
| Comparative Example 1 | Absence | Presence | Absence |
| Comparative Example 2 | Absence | Presence | Presence (amine absorption liquid) |

In combustion in each of Examples 1 to 5 and Comparative examples 1, 2, not combustion temperature in the gas turbine, gas compositions in inlet and outlet ports of the carbon dioxide gas separation unit are measured. a combustion energy per a unit volume was measured based on a gas composition at the outlet. Besides, in combustion in each of Examples 1 to 5 and Comparative examples 1, 2, each of heat losses in the carbon dioxide gas separation unit were measured from a ratio of an amount of combustion heat which can actually be recovered to an amount of combustion heat supplied fuel having theoretically. Results are shown in Table 2.

**Table 2**

| | Gas composition at inlet port of CO₂ separation unit | | Gas composition at outlet port of CO₂ gas separation unit | | Gas temperature at inlet port of combustor | Combustion energy of fuel gas | Heat loss percentage of combustion heat of supplied fuel in CO₂ gas separation unit |
|---|---|---|---|---|---|---|---|
| Example 1 | H₂ | 29% | H₂ | 31% | 480 | 2240 | 0.7 |
| | CO | 41% | CO | 43% | | | |
| | CO₂ | 10% | CO₂ | 4% | | | |
| | Others | 20% | Others | 22% | | | |
| Example 2 | H₂ | 30% | H₂ | 33% | 510 | 2350 | 1.0 |
| | CO | 40% | CO | 45% | | | |
| | CO₂ | 11% | CO₂ | 1% | | | |
| | Others | 19% | Others | 21% | | | |
| Example 3 | H₂ | 30% | H₂ | 33% | 490 | 2360 | 0.9 |
| | CO | 40% | CO | 44% | | | |
| | CO₂ | 11% | CO₂ | 1% | | | |
| | Others | 19% | Others | 21% | | | |

| | | | | | | | |
|---|---|---|---|---|---|---|---|
| Example 4 | H₂ | 49% | H₂ | 59% | 530 | 2180 | 2.2 |
| | CO | 4% | CO | 13% | | | |
| | CO₂ | 34% | CO₂ | 8% | | | |
| | Others | 13% | Others | 20% | | | |
| Example 5 | H₂ | 50% | H₂ | 74% | 620 | 2360 | 2.7 |
| | CO | 3% | CO | 4% | | | |
| | CO₂ | 35% | CO₂ | 3% | | | |
| | Others | 12% | Others | 19% | | | |
| Comparative Example 1 | H₂ | 30% | Same at left | | 430 | 2110 | - |
| | CO | 40% | | | | | |
| | CO₂ | 11% | | | | | |
| | Others | 12% | | | | | |
| Comparative Example 2 | H₂ | 39% | H₂ | 33% | 350 | 2350 | 6.3 |
| | CO | 40% | CO | 45% | | | |
| | CO₂ | 11% | CO₂ | 1% | | | |
| | Others | 19% | Others | 21% | | | |

As is clear from Table 2, it is understood the combustion systems of Examples 1 to 5 can all be improved on combustion temperatures and combustion heats of fuel gases as compared with those of Comparative example 1.

It is in addition understood that not only can the combustion systems of Examples 1 to 5 improved on combustion temperature as compared with Comparative example 2 in whose combustion system the carbon dioxide gas separation unit employing an alkanolamine solution recovery method was provided, but a ratio of heat loss to a combustion heat of fuel supplied in the separation unit can be decreased.

According to the present invention, as described above, since a carbon dioxide gas in a combustion gas of a high temperature is removed at the temperature without being cooled, not only can consumption energy be saved, but a combustion system that can burn a fuel gas having a high combustion heat with high efficiency is provided.

Furthermore, according to the present invention, in combustion of hydrocarbon base fuel after gasification, there can be provided a combustion system in which a carbon dioxide gas in a fuel gas of a high temperature is not cooled and removed at the temperature to reduce energy consumption, and at the same time a fuel gas with a high combustion heat and a reduced content of a sulfide gas can be burnt.

## Claims

1. Use of a combustion system for converting hydrocarbon base fuel wherein the combustion system comprises:
a fuel conversion unit (100) for converting hydrocarbon base fuel into a gas including carbon monoxide, hydrogen and carbon dioxide; and
a carbon dioxide gas separation unit (300) into which a gas generated in the conversion unit (100) is introduced;
**characterized in that**
in said carbon dioxide gas separation unit (300) a carbon dioxide gas absorbent comprising at least one lithium composite oxide for absorbing a carbon dioxide gas is accommodated,
wherein a combustion unit (400) for burning a gas separated in the separation unit (300) as fuel is provided in the combustion system,
and wherein a temperature of the gas in the separation unit (300) is higher than a temperature of the gas generated in the conversion unit (100).

2. Use according to claim 1,
**characterized in that** the carbon dioxide gas separation unit (300) comprises a reactor with a gas inlet port and a gas outlet port, and the carbon dioxide absorbent in the form of particles filled in the reactor.

3. Use according to claim 1, wherein the combustion system further comprises a modification unit (200) disposed between the fuel conversion unit (100) and the carbon dioxide gas separation unit (300), and the modification unit (200) produces hydrogen by reacting carbon monoxide in the gas introduced from the conversion unit and water vapor singly or together with oxygen.

4. Use according to claim 1, wherein the combustion system further comprises a desulfurization unit (500) disposed between the fuel conversion unit (100) and the carbon dioxide gas separation unit (300).

5. Use according to claim 3, wherein the combustion system further comprises a desulfurization unit (500) disposed between the fuel conversion unit (100) and the modification unit (200).

6. Use according to claim 3,
**characterized in that** the temperature of the gas generated in the modification unit (200) is in the range of from 350 to 500°C.

7. Use according to claim 1,
**characterized in that** the carbon dioxide gas absorbent produces heat in company with absorption of carbon dioxide.

8. Use of a combustion system for converting hydrocarbon base fuel wherein the combustion system comprises:
a fuel conversion unit (100) for converting hydrocarbon base fuel into a gas including carbon monoxide, hydrogen and carbon dioxide; and
a carbon dioxide gas separation unit (300) into which a gas generated in the conversion unit (100) is introduced;
**characterized in that**
in said carbon dioxide gas separation unit (300) a carbon dioxide gas absorbent comprising at least on lithium composite oxide for absorbing a carbon dioxide gas is accommodated,
wherein a combustion unit (400) for burning a gas separated in the separation unit (300) as fuel is provided in the combustion system,
wherein said carbon dioxide separation unit (300) comprises a reactor, and a disc disposed in the reactor near the bottom thereof and holding the carbon dioxide gas absorbent in the forms of particles, and a drive source for rotating the disc, and a partition wall fixed on opposed inner side walls in the reactor, an upper inner surface of the reactor and having lower end to contact the upper surface of the disc, so that the partition wall halves the reactor into left and right sides to form first chamber connected to the fuel conversion unit and second chamber connected to a reproducing gas supply source, and
wherein a temperature of the gas separated in the separation unit (300) is higher than a temperature of the gas in the conversion unit (100).

9. Use according to claim 8, wherein the combustion system further comprises a modification unit (200) disposed between the fuel conversion unit (100) and the carbon dioxide gas separation unit (300) wherein the temperature of the gas generated in the modification unit (200) is in the range of from 350 to 500°C.

10. Use according to claim 8,
**characterized in that** the carbon dioxide gas absorbent produces heat in company with absorption of carbon dioxide.

11. Use according to claim 8,
**characterized in that** the carbon dioxide gas absorbent contains at least one lithium composite oxide selected from the group consisting of lithium zirconate, lithium ferrite, lithium nickel oxide and lithium titanate.

12. Use of a combustion system for converting hydrocarbon base fuel wherein the combustion system comprises:
a fuel conversion unit (100) for converting hydrocarbon base fuel into a gas including carbon monoxide, hydrogen and carbon dioxide; and
a carbon dioxide gas separation unit (300) into which a gas generated in the conversion unit (100) is introduced;
**characterized in that**
in said carbon dioxide gas separation unit (300) a carbon dioxide gas absorbent for absorbing a carbon dioxide gas is accommodated,
wherein a combustion unit (400) for burning a gas separated in the separation unit (300) as fuel is provided in the combustion system,
and wherein the carbon dioxide absorbent contains at least one lithium composite oxide selected from the group consisting of lithium zirconate, lithium ferrite, lithium nickel oxide and lithium titanate, and wherein a temperature of the gas in the separation unit (300) is higher than a temperature of the gas generated in the conversion unit (100).

13. Use according to claim 12,
**characterized in that** the carbon dioxide gas separation unit (300) comprises a reactor with a gas inlet port and a gas outlet port, and the carbon dioxide absorbent in the form of particles filled in the reactor.

14. Use according to claim 12, wherein the combustion system further comprises a modification unit (200) disposed between the fuel conversion unit (100) and the carbon dioxide gas separation unit (300), and the modification unit (200) produces hydrogen by reacting carbon monoxide in the gas introduced from the conversion unit and water vapor singly or together with oxygen.

15. Use according to claim 12, wherein the combustion system further comprises a desulfurization unit (500) disposed between the fuel conversion unit (100) and the carbon dioxide gas separation unit (300).

16. Use according to claim 14,
**characterized in that** the temperature of the gas generated in the modification unit (200) is in the range of from 350 to 500°C.

17. Use system according to claim 12,
**characterized in that** the carbon dioxide gas absorbent produces heat in company with absorption of carbon dioxide.

## Patentansprüche

1. Verwendung eines Verbrennungssystems zur Umwandlung von auf Kohlenwasserstoff basierendem Brennstoff, wobei das Verbrennungssystem umfasst:
eine Brennstoff-Umwandlungseinheit (100) zum Umwandeln von auf Kohlenwasserstoff basierendem Brennstoff in ein Gas inklusive Kohlenmonoxid, Wasserstoff und Kohlendioxid; und
eine Kohlendioxidgas-Abtrenneinheit (300), in die ein in der Umwandlungs-Einheit (100) erzeugtes Gas eingeführt wird;
**dadurch gekennzeichnet, dass**
in der Kohlendioxidgas-Abtrenneinheit (300) ein Kohlendioxidgas-Absorptionsmittel, umfassend zumindest ein Lithiumkompositoxid zum Absorbieren eines Kohlendioxidgases angeordnet ist,
wobei eine Verbrennungseinheit (400) zum Verbrennen eines in der Abtrenneinheit (300) separierten Gases als Brennstoff in dem Verbrennungssystem vorgesehen ist,
und wobei eine Temperatur des Gases in der Abtrenneinheit (300) größer als eine Temperatur des Gases, welches in der Umwandlungseinheit (100) erzeugt wurde, ist.

2. Verwendung gemäß Anspruch 1,
**dadurch gekennzeichnet, dass** die Kohlendioxidgas-Abtrenneinheit (300) einen Reaktor mit einem Gas-Einlassanschluss und einem Gas-Auslassanschluss umfasst, und dass Kohlendioxid-Absorptionsmittel in der Form von in den Reaktor eingefügten Partikeln vorliegt.

3. Verwendung gemäß Anspruch 1, wobei das Verbrennungssystem des Weiteren eine Modifikations-Einheit (200) umfasst, die zwischen der Brennstoff-Umwandlungseinheit (100) und der Kohlendioxidgas-Abtrenneinheit (300) angeordnet ist, und wobei die Modifikations-Einheit (200) Wasserstoff durch die Reaktion von Kohlenmonoxid in dem von der Umwandlungseinheit eingeführten Gas und Wasserdampf einfach und zusammen mit Sauerstoff produziert.

4. Verwendung gemäß Anspruch 1, wobei das Verbrennungssystem des Weiteren eine Entschwefelungs-Einheit (500) umfasst, die zwischen der Brennstoff-Umwandlungseinheit (100) und der Kohlendioxidgas-Abtrenneinheit (300) angeordnet ist.

5. Verwendung gemäß Anspruch 3, wobei das Verbrennungssystem des Weiteren eine Entschwefelungs-Einheit (500) umfasst, die zwischen der Brennstoff-Umwandlungseinheit (100) und der Modifikationseinheit (200) angeordnet ist.

6. Verwendung gemäß Anspruch 3,
**dadurch gekennzeichnet, dass** die Temperatur des in der Modifikations-Einheit (200) erzeugten Gases im Bereich von 350 bis 500°C liegt.

7. Verwendung gemäß Anspruch 1,
**dadurch gekennzeichnet, dass** das Kohlendioxidgas-Absorptionsmittel zusammen mit der Absorption des Kohlendioxids Wärme erzeugt.

8. Verwendung eines Verbrennungssystems zum Umwandeln von auf Kohlenwasserstoff basierendem Brennstoff, wobei das Verbrennungssystem umfasst:
eine Brennstoff-Umwandlungseinheit (100) zum Umwandeln von auf Kohlenwasserstoff basierendem Brennstoff in ein Gas, inklusive Kohlenmonoxid, Wasserstoff und Kohlendioxid; und
eine Kohlendioxidgas-Abtrenneinheit (300), in die ein in der Umwandlungseinheit (100) erzeugtes Gas eingeführt wird;
wobei in der Kohlendioxidgas-Abtrenneinheit (300) ein Kohlendioxidgas-Absorptionsmittel, welches zumindest ein Lithiumkompositoxid zum Absorbieren eines Kohlendioxidgases umfasst, angeordnet ist,
wobei eine Verbrennungs-Einheit (400) zum Verbrennen eines in der Abtrenneinheit (300) abgetrennten Gases als Brennstoff in dem Verbrennungssystem vorgesehen ist,
wobei die Kohlendioxidgas-Abtrenneinheit (300) einen Reaktor umfasst, sowie eine Schreibe, die in dem Reaktor nahe dessen Boden angeordnet ist und das Kohlendioxidgas-Absorptionsmittel in der Form von Partikeln hält, sowie eine Antriebsquelle zum Drehen der Schreibe und eine Trennwand, die an den entgegengesetzten inneren Seitenwänden in dem Reaktor fixiert ist, wobei eine obere innere Oberfläche des Reaktors, die ein unteres Ende aufweist, um die obere Oberfläche der Scheibe zu berühren, so dass die Trennwand den Reaktor in linke und rechte Seiten halbiert, um eine erste Kammer auszubilden, die mit der Brennstoff-Umwandlungseinheit verbunden ist, sowie eine zweite Kammer, die mit einer Reproduktionsgas-Zufuhrquelle verbunden ist, und
wobei eine Temperatur des Gases, das in der Abtrenneinheit (300) abgetrennt wurde, höher als eine Temperatur des Gases in der Umwandlungseinheit (100) ist.

9. Verwendung gemäß Anspruch 8, wobei das Verbrennungssystem des Weiteren eine Modifikationseinheit (200) umfasst, die zwischen der Brennstoff-Umwandlungseinheit (100) und der Kohlendioxidgas-Abtrenneinheit (300) angeordnet ist, wobei die Temperatur des in der Modifikationseinheit (200) erzeugten Gases im Bereich von 350 bis 500°C liegt.

10. Verwendung gemäß Anspruch 8,
**dadurch gekennzeichnet, dass** das Kohlendioxidgas-Absorptionsmittel in Verbindung mit der Absorption des Kohlendioxids Wärme produziert.

11. Verwendung gemäß Anspruch 8,
**dadurch gekennzeichnet, dass** das Kohlendioxidgas-Absorptionsmittel zumindest ein Lithiumkompositoxid enthält, welches aus der Gruppe ausgewählt ist, die aus Lithiumzirkonat, Lithiumferrit, Lithiumnickeloxid und Lithiumtitanat besteht.

12. Verwendung eines Verbrennungssystems zum Umwandeln von auf Kohlenwasserstoff basierendem Brennstoff, wobei das Verbrennungssystem umfasst:
eine Brennstoff-Umwandlungseinheit (100) zum Umwandeln von auf Kohlenwasserstoff basierendem Brennstoff in ein Gas inklusive Monoxid, Wasserstoff und Kohlendioxid; und
eine Kohlendioxidgas-Abtrenneinheit (300), in die ein in der Umwandlungseinheit (100) erzeugtes Gas eingeführt wird;
**dadurch gekennzeichnet, dass**
in der Kohlendioxidgas-Abtrenneinheit (300) ein Kohlendioxidgas-Absorptionsmittel zum Absorbieren eines Kohlendioxidgases angeordnet ist,
wobei eine Umwandlungseinheit (400) zum Verbrennen eines in der Abtrenneinheit (300) abgetrennten Gases als Brennstoff in dem Verbrennungssystem vorgesehen ist,
und wobei das Kohlendioxid-Absorptionsmittel zumindest ein Lithiumkompositoxid enthält, welches aus der Gruppe ausgewählt ist, die aus Lithiumzirkonat, Lithiumferrit, Lithiumnickeloxid und Lithiumtitanat besteht, und wobei eine Temperatur des Gases in der Abtrenneinheit (300) höher als eine Temperatur des in der Umwandlungseinheit (100) erzeugten Gases ist.

13. Verwendung gemäß Anspruch 12,
**dadurch gekennzeichnet, dass** die Kohlendioxidgas-Abtrenneinheit (300) einen Reaktor mit einem Gas-Einlassanschluss und einem Gas-Auslassanschluss umfasst, und das Kohlendioxid-Absorptionsmittel in der Form von Partikeln in den Reaktor gefüllt wird.

14. Verwendung gemäß Anspruch 12, wobei das Verbrennungssystem des Weiteren eine Modifikationseinheit (200) umfasst, die zwischen der Brennstoff-Umwandlungseinheit (100) und der Kohlendioxidgas-Abtrenneinheit (300) angeordnet ist, und wobei die Modifikationseinheit (200) Wasserstoff durch die Reaktion des Kohlenmonoxids in dem von der Umwandlungseinheit eingeführten Gases und Wasserdampf einfach oder zusammen mit Sauerstoff produziert.

15. Verwendung gemäß Anspruch 12, wobei das Verbrennungssystem des Weiteren eine Entschwefelungseinheit (500) umfasst, die zwischen der Brennstoff-Umwandlungseinheit (100) und der Kohlendioxidgas-Abtrenneinheit (300) angeordnet ist.

16. Verwendung gemäß Anspruch 14, **dadurch gekennzeichnet, dass** die Temperatur des in der Umwandlungseinheit (200) erzeugten Gases im Bereich von 350 bis 500°C liegt.

17. Verwendung gemäß Anspruch 12, **dadurch gekennzeichnet, dass** das Kohlendioxidgas-Absorptionsmittel im Zusammenhang mit der Absorption des Kohlendioxids Wärme produziert.

## Revendications

1. Utilisation d'un système de combustion pour transformer un combustible à base d'hydrocarbures dans laquelle le système de combustion comprend
une unité de conversion de combustible (100) pour transformer un combustible à base d'hydrocarbures en un gaz incluant du monoxyde de carbone, de l'hydrogène et du dioxyde de carbone; et
une unité de séparation de dioxyde de carbone gazeux (300) dans laquelle un gaz généré dans l'unité de conversion (100) est introduit;
**caractérisée en ce que**
dans ladite unité de séparation de dioxyde de carbone gazeux (300), un absorbant de dioxyde de carbone gazeux comprenant au moins un oxyde composite de lithium pour absorber un dioxyde de carbone gazeux est agencé,
dans laquelle une unité de combustion (400) pour brûler un gaz séparé dans l'unité de séparation (300) en tant que combustible est fournie dans le système de combustion,
et dans laquelle une température du gaz dans l'unité de séparation (300) est plus élevée que une température du gaz généré dans l'unité de conversion (100).

2. Utilisation selon la revendication 1, **caractérisée en ce que** l'unité de séparation de dioxyde de carbone gazeux (300) comprend un réacteur avec un orifice d'entrée de gaz et un orifice de sortie de gaz, et l'absorbant de dioxyde de carbone sous la forme de particules chargé dans le réacteur.

3. Utilisation selon la revendication 1, dans laquelle le système de combustion comprend en outre une unité de modification (200) disposée entre l'unité de conversion de combustible (100) et l'unité de séparation de dioxyde de carbone gazeux (300), et l'unité de modification (200) produit de l'hydrogène en faisant réagir le monoxyde carbone dans le gaz introduit à partir de l'unité de conversion et de la vapeur d'eau seule ou en combinaison avec de l'oxygène.

4. Utilisation selon la revendication 1, dans laquelle le système de combustion comprend en outre une unité de désulfurisation (500) disposée entre l'unité de conversion de combustible (100) et l'unité de séparation de dioxyde de carbone gazeux (300).

5. Utilisation selon la revendication 3, dans laquelle le système de combustion comprend en outre une unité de désulfurisation (500) disposée entre l'unité de conversion de combustible (100) et l'unité de modification (200).

6. Utilisation selon la revendication 3, **caractérisée en ce que** la température du gaz généré dans l'unité de modification (200) est dans la gamme allant de 350 à 500°C

7. Utilisation selon la revendication 1, **caractérisée en ce que** l'absorbant de dioxyde de carbone gazeux produit de la chaleur conjointement à l'absorption de dioxyde de carbone.

8. Utilisation d'un système de combustion pour transformer un combustible à base d'hydrocarbures dans laquelle le système de combustion comprend :
une unité de conversion de combustible (100) pour transformer un combustible à base d'hydrocarbures en un gaz incluant du monoxyde de carbone, de l'hydrogène et du dioxyde de carbone; et
une unité de séparation de dioxyde de carbone gazeux (300) dans laquelle un gaz généré dans l'unité de conversion (100) est introduit;
**caractérisée en ce que**
dans ladite unité de séparation de dioxyde de carbone gazeux (300), un absorbant de dioxyde de carbone gazeux comprenant au moins un oxyde composite de lithium pour absorber un dioxyde de carbone gazeux est agencé,
dans laquelle une unité de combustion (400) pour brûler un gaz séparé dans l'unité de séparation (300) en tant que combustible est fournie dans le système de combustion,
dans laquelle ladite unité de séparation de dioxyde de carbone (300) comprend un réacteur, et un disque disposé dans le réacteur à proximité du fond de celui-ci et portant l'absorbant de dioxyde de carbone gazeux sous la forme de particules, et une source d'entraînement pour faire tourner le disque, et une paroi de séparation fixée sur des parois latérales intérieures opposées dans le réacteur, et une surface intérieure supérieure du réacteur et ayant une extrémité inférieure pour être en contact avec la surface supérieure du disque, de manière à ce que la paroi de séparation sépare en deux le réacteur en des côtés gauche et droit pour former une première chambre reliée à l'unité de conversion de combustible et une seconde chambre reliée à une source d'alimentation reproduisant du gaz, et
dans laquelle une température du gaz séparé dans l'unité de séparation (300) est plus élevée que une température du gaz dans l'unité de conversion (100).

9. Utilisation selon la revendication 8, dans laquelle le système de combustion comprend en outre une unité de modification (200) disposée entre l'unité de conversion de combustible (100) et l'unité de séparation de dioxyde de carbone gazeux (300) dans laquelle la température du gaz généré dans l'unité de modification (200) est dans la gamme allant de 350 à 500°C.

10. Utilisation selon la revendication 8, **caractérisée en ce que** l'absorbant de dioxyde de carbone produit de la chaleur conjointement à une absorption de dioxyde de carbone.

11. Utilisation selon la revendication 8, **caractérisée en ce que** l'absorbant de dioxyde de carbone gazeux contient au moins un oxyde composite de lithium choisi dans le groupe constitué par le zirconate de lithium, la ferrite de lithium, l'oxyde de nickel et de lithium et le titanate de lithium.

12. Utilisation d'un système de combustion pour transformer un combustible à base d'hydrocarbures dans laquelle le système de combustion comprend
une unité de conversion de combustible (100) pour transformer un combustible à base d'hydrocarbures en un gaz incluant du monoxyde de carbone, de l'hydrogène et du dioxyde de carbone; et
une unité de séparation du dioxyde de carbone gazeux (300) dans laquelle un gaz généré dans l'unité de conversion (100) est introduit;
**caractérisée en ce que**
dans ladite unité de séparation de dioxyde de carbone gazeux (300), un absorbant de dioxyde de carbone gazeux pour absorber un dioxyde de carbone gazeux est agencé,
dans laquelle une unité de combustion (400) pour brûler un gaz séparé dans l'unité de séparation (300) en tant que combustible est fournie dans le système de combustion,
et dans laquelle l'absorbant de dioxyde de carbone contient au moins un oxyde composite de lithium choisi dans le groupe constitué par le zirconate de lithium, la ferrite de lithium, l'oxyde de nickel et de lithium et le titanate de lithium, et dans laquelle une température du gaz dans l'unité de séparation (300) est plus élevée que une température du gaz généré dans l'unité de conversion (100).

13. Utilisation selon la revendication 12, **caractérisée en ce que** l'unité de séparation de dioxyde de carbone gazeux (300) comprend un réacteur avec un orifice d'entrée de gaz et un orifice de sortie de gaz, et l'absorbant de dioxyde de carbone sous la forme de particules chargé dans le réacteur.

14. Utilisation selon la revendication 12, dans laquelle le système de combustion comprend en outre une unité de modification (200) disposée entre l'unité de conversion de combustible (100) et l'unité de séparation de dioxyde de carbone gazeux (300), et l'unité de modification (200) produit de l'hydrogène en faisant réagir le monoxyde carbone dans le gaz introduit à partir de l'unité de conversion et de la vapeur d'eau seule ou en combinaison avec de l'oxygène.

15. Utilisation selon la revendication 12, dans laquelle le système de combustion comprend en outre une unité de désulfurisation (500) disposée entre l'unité de conversion de combustible (100) et l'unité de séparation de dioxyde de carbone gazeux (300).

16. Utilisation selon la revendication 14, **caractérisée en ce que** la température du gaz généré dans l'unité de modification (200) est dans la gamme allant de 350 à 500°C

17. Utilisation selon la revendication 12, **caractérisée en ce que** l'absorbant de dioxyde de carbone gazeux produit de la chaleur conjointement à l'absorption du dioxyde de carbone.
